# EUROPÄISCHE PATENTANMELDUNG

(11) **EP 1 154 003 A1**
(43) Veröffentlichungstag der Anmeldung: **14.11.2001**
(21) Anmeldenummer: 01107839.1
(22) Anmeldetag: 06.04.2001
(51) Int. Cl.: C09J 7/04

(54) **Auf sich selbst wickelbares Klebeband**

(30) Priorität: 10.05.2000 DE 20008394 U
(71) Anmelder: Coroplast Fritz Müller GmbH & Co. KG, 42279 Wuppertal (DE)
(72) Erfinder: Lodde, Christoph Dipl.-Ing., 44225 Dortmund (DE)
(74) Vertreter: Patentanwälte Dr. Solf & Zapf

(57) **Zusammenfassung**

Die Erfindung betrifft ein Klebeband mit einem aus einem Vlies bestehenden bandförmigen Träger, der auf einer Seite mit einer druckempfindlichen Klebebeschichtung und auf der anderen Seite mit einer Antihaftbeschichtung versehen ist. Um mit wenig Aufwand zu erreichen, daß ein solches Klebeband gegenüber Flüssigkeiten einen ausreichenden Diffusionswiderstand aufweist, daß es sich, auch bei einem vergleichsweise geringen Flächengewicht des Trägers (< 60 g/m²) gut auf sich selbst auf- und von sich selbst wieder abwickeln läßt und daß durch die auf den Träger aufgebrachte Antihaftbeschichtung weder Klebkraftverluste noch Störungen in der Kleberverankerung auftreten können, wird vorgeschlagen, die Antihaftbeschichtung aus einer vernetzten Polysiloxanverbindung herzustellen.

## Beschreibung

Die vorliegende Erfindung betrifft ein auf sich selbst wickelbares Klebeband mit einem aus einem Vlies bestehenden bandförmigen Träger, der auf einer Seite mit einer druckempfindlichen Klebebeschichtung und auf der anderen Seite mit einer Antihaftbeschichtung versehen ist.

Für auf sich selbst wickelbare textile Klebebänder ist der Einsatz von verschiedenartigen Materialien als Träger bekannt. Diese sind Zellwoll-Gewebe, gegebenenfalls mit Acrylatbeschichtung, PET-Gewebe und PET-Nähvliese, letztere beispielsweise wasserstrahlverfestigt, Nadelvliese mit einseitiger Kalandrierung sowie Vliese mit einer Antihaftbeschichtung.

Zellwoll-Gewebeklebebänder haben den Nachteil, daß sie auf-grund des Gewebes teuer und verrottbar sind. Acrylatbeschichtete Träger aus diesem Material sind nur in aufwendiger Weise herstellbar und somit noch teuerer. Auch PET-Gewebeklebebänder haben den Nachteil, daß sie teuer sind, und zwar ebenfalls aufgrund ihres Gewebematerials. Bei PET-Nähvliesen erweist sich ihre offene Struktur als nachteilig, so daß durch ein damit hergestelltes Klebeband leicht Flüssigkeiten hindurchdiffundieren können. Dies trifft auch für wasserstrahlverfestigte PET-Vliese zu. Der Nachteil von Nadelvlies mit einseitiger Kalandrierung besteht in einem minimal notwendigen Flächengewicht von 60g/m², wie dies beispielsweise bei dem Klebeband gemäß dem deutschen Patent DE 195 23 494 C2 der Fall ist. In diesem Dokument ist die Verwendung eines Klebebandes mit einem Träger aus Vliesmaterial, der einseitig mit einem Kleber beschichtet ist, zum Bandagieren von Kabelbäumen beschrieben. Das Vlies ist ein Spinnvlies aus Polypropylen welches mit Hilfe eines Kalanders thermisch verfestigt und geprägt ist, wobei die Prägewalze eine Prägefläche von 10% bis 30% aufweist, und das ein Vliesgewicht von 60 bis 100 g/m², eine Vliesdicke von 400 um bis 600 µm, eine Feinheit von 2 dtex bis 7 dtex, eine Reißkraft von 200 N/(5 cm) bis 270 N/(5 cm) und eine Reißdehnung von 55% bis 85% aufweist.

Die Nachteile des Einsatzes bekannter Vliese mit Trennmittelbeschichtung bestehen zum einen in einem minimal notwendigen Flächengewicht von 60 g/m² und zum anderen darin, daß es bei der Antihaftbeschichtung vorkommen kann, daß diese sich nicht vollständig mit dem Trägermaterial verbindet, wodurch es zu einer Kontamination der Kleber-oberfläche und aufgrund dessen zu einem Klebkraftverlust kommen kann. Drittens ist es nachteiligerweise möglich, daß das zur Anfihaftbeschichtung verwendete Material bei der Beschichtung das Trägermaterial durchdringt und dadurch Störungen in der Kleberverankerung verursacht.

Erfahrungsgemäß lassen sich Nadelvliese oder Spinnvliese mit oder ohne Trennmittelbeschichtung gar nicht oder nur sehr schwer zu auf sich selbst gewickelten Klebebändern verarbeiten, da diese Materialien zum Verblocken neigen, weil keine genügend hohe Verfestigung im Trägervlies erreicht werden kann. Daher müssen insbesondere Vliese mit einem geringen Flächengewicht bisher mit einem Interliner abgedeckt werden um die Verblockung/Verklebung dieses Bandes zu verhindern.

Der vorliegenden Erfindung liegt die Aufgabe zugrunde, ein Klebeband der eingangs genannten Art mit wenig aufwendigen Mitteln derart zu verbessern, daß es gegenüber Flüssigkeiten einen ausreichenden Diffusionswiderstand aufweist, daß es sich - auch bei einem im Vergleich zu den bekannten Klebebändern - geringen Flächengewicht des Trägers, insbesondere bei einem Flächengewicht von weniger als 60 g/m² - gut auf sich selbst auf- und von sich selbst wieder abwickeln läßt und daß durch die auf den Träger aufgebrachte Antihaftbeschichtung weder Klebkraftverluste noch Störungen in der Kleberverankerung auftreten können.

Diese Aufgabe wird durch ein Klebeband der eingangs ge-nannten Art gelöst, bei dem die Antihaftbeschichtung aus einer vernetzten Polysiloxanverbindung besteht.

Polysiloxane (Silicone) sind makromolekulare siliciumorganische Verbindungen, deren kettenartiges Grundgerüst aus Silicium- und Sauerstoffatomen besteht, die alternierend miteinander verknüpft sind, wobei an das Silicium organische Reste, wie insbesondere Alkylgruppen, gebunden sind, die spezifische funktionelle Gruppen enthalten können, welche eine Vernetzung im Molekül ermöglichen. Zusätzlich zu den aufgabengemäß durch die Erfindung angestrebten vorteilhaften Eigenschaften gewährleistet eine Antihaftbeschichtung aus einer vemetzten Polysiloxanverbindung auch eine hohe Temperaturbeständigkeit und chemische Resistenz. Neben dem Vorteil der Einsatzmöglichkeit von Vliesen mit geringem Flächengewicht ist die erfindungsgemäße Antihaftbeschichtung auch mit Vliesen aus den sehr preiswerten Polypropylen-Fasern kombinierbar.

In bevorzugter Ausführung kann die Polysiloxanverbindung der Antihaftbeschichtung durch die Einwirkung von Strahlung, insbesondere ultravioletter Strahlung, vernetzt sein. Ein wesentlicher Vorteil besteht dabei in der berührungslosen, jedoch hocheffizienten Behandlung der Polysiloxanschicht. Dazu wird auf das als Trägermaterial verwendete Vlies einseitig ein z.B. UV-vernetzbares Siliconsystem aufgebracht und unmittelbar nach dem Auftragen durch Bestrahlung mit geeigneten UV-Lampen vernetzt. Durch das unmittelbare Vernetzen der Siliconschicht wird eine Penetration des Silicons durch den Vliesträger verhindert. Diese Vernetzung gewährleistet somit eine erhöhte Sicherheit hinsichtlich einer vollständigen Verbindung der Antihaftbeschichtung mit dem Trägermaterial. Gegenüber einer Aushärtung durch Wärme besteht die Vorteilhaftigkeit einer UV-Vernetzung dabei in einer vergleichsweise sehr schnellen und gründlichen Aushärtung des Silicons. Dieses kann dadurch das Trägermaterial nicht durchdringen, was zu Störungen bei der Beschichtung mit dem Kleber führen würde. Die möglichst vollständige Aushärtung der Siliconbeschichtung ist notwendig, damit sich keine unausgehärteten Partikel in der Kleberschicht erhalten, wodurch beim Gebrauch Störungen in der Haftwirkung auftreten könnten.

Die Siliconisierung des Trägers kann durch lösungsmittelfreies Auftragen eines Siliconharzes, durch Auftragen als Emulsion oder durch Auftragen eines Siliconlackes (Lösung eines Siliconharzes in einem nach dem Auftragen verdunstenden organischen Lösungsmittel, wie Toluol, Xylol o.ä.) und anschließende Vernetzung vorgenommen werden.

Die Antihaftbeschichtung/Siliconisierung kann beispielsweise Off-line - d.h. als ein separater Arbeitsschritt der Klebebandfertigung erfolgen. Hierzu wird das Trägermaterial von einer Mutterrolle abgezogen, und das Silicon wird aufgetragen.

Danach läuft das Material unter einer Strahlungsquelle durch, wodurch das Silicon aushärtet. Schließlich wird das Material wieder aufgewickelt, wobei die Lauflänge nach Wunsch eingestellt werden kann. Andererseits kann die Siliconisierung auch In-line-d.h. unmittelbar vor der Aufbringung der Klebebeschichtung erfolgen. Dabei ist es von Vorteil, wenn zumindest die Oberflächenseite des Vlieses, auf die die Beschichtung aufgetragen wird, glatt ist.

Die erfindungsgemäße Antihaftbeschichtung gewährleistet beim Abwickeln des Klebebandes eine optimale Ablösbarkeit der Klebebeschichtung von der mit der Antihaftbeschichtung versehenen oberen Trägerseite, wobei als druckempfindliche Klebstoffe wahlweise Naturkautschukkleber (bestehend aus Isoprenkautschuk - IIR, Harzen, Füllstoffen, Weichmachern und Antioxidantien), Synthesekautschukkleber oder Acrylatkleber bzw. UV-vernetzbare Acrylatkleber eingesetzt werden können.

Weitere vorteilhafte Ausführungen der Erfindung sind in den Unteransprüchen und der nachfolgenden speziellen Beschreibung enthalten, in der anhand mehrerer Ausführungsbeispiele die Erfindung näher erläutert wird.

### Beispiel 1

Ein Kabelwickelband wird aus einem Metallocen PP - Spinn-vlies mit einem Flächengwicht von 30 g/m² als Trägermaterial hergestellt. Für die Klebebeschichtung wird ein mit einem Flächengewicht von 60 g/m² aufgetragener Synthesekautschuk-kleber eingesetzt, d.h. ein Kleber auf der Basis eines Styrol-Dien-Blockcopolymers (z.B. Styrol-Isopren-Styrol, Styrol-Butadien-Styrol oder Styrol-Ethylen-Butadien-Styrol), welches mit Harzen, Füllstoffen, Weichmachern und Antioxidantien modifziert wurde. Der Träger wird einseitig siliconisiert, wobei ein sogenanntes "Controlled Release" eingestellt wird, bei dem die Klebkraft > 0,2 N/cm (bei Prüfung gemäß FINAT 10) beträgt. Die nachstehende Tabelle 1 gibt einen zusammenfassenden Überblick über weitere charakteristische Eigenschaften des Kabelwickelbandes.

**Tabelle 1**

| Prüfgröße | Einheit | Wert |
|---|---|---|
| Banddicke | mm | 0,130-0,170 |
| Mechanische Werte | | |
| Reißdehnung | % | 70-90 |
| Reißfestigkeit | N/cm | 10-25 |
| Klebkraft | | |
| - auf Stahl | N/cm | 3,5-4,5 |
| - auf Bandrücken | N/cm | 1,2 |
| Abrollkraft | | |
| - Handverarbeitung | N/19 cm | 2,0-70 |
| - Maschinenverarbeitung | N/19 cm | 1,0-6,0 |

### Beispiel 2

Ein General Purpose Tape wird aus einem Nadelvlies mit einem Flächengwicht von 40 g/m² als Trägermaterial hergestellt. Für die Klebebeschichtung wird - wie beim ersten Beispiel - ein mit einem Flächengewicht von 70 g/m² aufgetragener Synthesekautschukkleber eingesetzt. Der Träger wird einseitig siliconisiert, wobei ein sogenanntes "Controlled Release" eingestellt wird, bei dem die Klebkraft > 0,2 N/cm (bei Prüfung gemäß FINAT 10) beträgt. Die nachstehende Tabelle 2 gibt einen zusammenfassenden Über-blick über weitere charakteristische Eigenschaften des General Purpose Tape.

**Tabelle 2**

| Prüfgröße | Einheit | Wert |
|---|---|---|
| Banddicke | mm | 0,22-0,27 |
| Mechanische Werte | | |
| Reißdehnung | % | 60-80 |
| Reißfestigkeit | N/cm | 25-35 |
| Klebkraft | | |
| - auf Stahl | N/cm | 5,0-7,0 |
| - auf Bandrücken | N/cm | 2,0-3,0 |
| Abrollkraft | | |
| - Handverarbeitung | N/19 cm | 2,0-7,0 |
| - Maschinenverarbeitung | N/19 cm | 1,0-6,0 |

### Beispiel 3

Ein Masking Tape (Klebeband für Abdeckzwecke) wird aus einem PE-Spinnvlies mit einem Flächengwicht von 20 g/m² als Trägermaterial hergestellt. Für die Klebebeschichtung wird ein mit einem Flächengewicht von 40 g/m² aufgetragener UV-vernetzter Acrylatkleber eingesetzt. Der Träger wird einseitig siliconisiert, wobei ein sogenanntes "Easy Release" eingestellt wird, bei dem die Klebkraft < 0,1 N/cm (bei Prüfung gemäß FINAT 10) beträgt. Die nachstehende Tabelle 3 gibt einen zusammenfassenden Überblick über weitere charakteristische Eigenschaften des Masking Tape.

**Tabelle 3**

| Prüfgröße | Einheit | Wert |
|---|---|---|
| Banddicke | mm | 0,07-0,12 |
| Mechanische Werte | | |
| Reißdehnung | % | 50-70 |
| Reißfestigkeit | N/cm | 10-15 |
| Klebkraft | | |
| - auf Stahl | N/cm | 1,5-2,5 |
| - auf Bandrücken | N/cm | 0,02-0,07 |
| Abrollkraft | | |
| - Handverarbeitung | N/19 cm | 2,0-6,0 |

Die Begriffe "Controlled Release" und "Easy Release" beziehen sich, wie bereits aus dem Vorstehenden hervorgeht, auf die Größe der u.a. mittels des Siliconauftrags einstellbaren Trenn- bzw. Abzugskraft des Klebebandes. Diese Kraft ist abhängig vom verwendeten Silicontyp und von dem Kleber, mit dem sie ermittelt wird, wobei "Easy Release" die niedrigst mögliche Einstellung der Trennkraft zwischen siliconisierter Oberfläche und Kleberschicht bezeichnet. "Controlled Release" bezeichnet eine höher eingestellte Trennkraft (bis zum Fünfzigfachen des Wertes der Trennkraft beim "Easy Release"). Als Vorzugswerte für die Klebkraft beim Wickeln des Bandes auf sich selbst (- auf der Oberfläche des Trägers auf der Seite, auf der die Antihaftbeschichtung aufgetragen ist -) werden für das "Controlled Release" Werte im Bereich von etwa 1,0 bis etwa 4,0 N/cm und für das "Easy Release" im Bereich von etwa 0,02 bis etwa 0,20 N/cm angesehen.

Die erwähnte Prüfung gemäß FINAT 10 (auch FTM 10 - FINAT-Testmethode Nr. 10) stellt dabei eine durch den Internationalen Verband der Hersteller und Anwender von Haftverbunden für selbstklebende Etiketten - FINAT (mit Sitz in Den Haag) - genormte Ermittlungsmethode für die Trennkraft dar.

Die Erfindung beschränkt sich nicht auf die beschriebenen Ausführungsbeispiele, sondern umfaßt auch alle im Sinne der Erfindung gleichwirkenden Ausführungen. So können beispilesweise als Siliconharze Polymethyl- oder insbesondere Polymethylphenylsiloxane zum Einsatz kommen, wobei bei letzteren durch einen höheren Anteil an Phenylgruppen im Molekül eine höhere Elastizität der Schicht eingestellt werden kann. Auch eine Verwendung von Siloxan-Copolymeren ist erfindungsgemäß möglich. Zur Vernetzung können die Ausgangsstoffe zu Herstellung der Antihaftbeschichtung Kondensationskatalysatoren enthalten, die der Beschleunigung der Vernetzung dienen.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der An-spruch 1 lediglich als ein erster Formulierungsversuch für eine Erfindung zu verstehen.

## Patentansprüche

1. Klebeband mit einem aus einem Vlies bestehenden bandförmigen Träger, der auf einer Seite mit einer druckempfindlichen Klebebeschichtung und auf der anderen Seite mit einer Antihaftbeschichtung versehen ist,
**dadurch gekennzeichnet, daß** die Antihaftbeschichtung aus einer vernetzten Polysiloxanverbindung besteht.

2. Klebeband nach Anspruch 1,
**dadurch gekennzeichnet, daß** die Polysiloxanverbindung UV-vernetzt ist.

3. Klebeband nach Anspruch 1 oder 2,
**dadurch gekennzeichnet, daß** die Polysiloxanverbindung ein Siliconharz ist.

4. Klebeband nach Anspruch 1 oder 2,
**dadurch gekennzeichnet, daß** die Polysiloxanverbindung ein Siliconlack ist.

5. Klebeband nach einem der Ansprüche 1 bis 4,
**dadurch gekennzeichnet, daß** das Vlies ein Flächengewicht von weniger als 60 g/m² aufweist.

6. Klebeband nach einem der Ansprüche 1 bis 5,
**dadurch gekennzeichnet, daß** das Vlies ein Nadelvlies ist.

7. Klebeband nach einem der Ansprüche 1 bis 5,
**dadurch gekennzeichnet, daß** das Vlies ein Spinnvlies ist.

8. Klebeband nach einem der Ansprüche 1 bis 7,
**dadurch gekennzeichnet, daß** die Oberfläche des Träges auf der Seite, auf der die Antihaftbeschichtung aufgetragen ist, glatt ist.

9. Klebeband nach einem der Ansprüche 1 bis 8,
**dadurch gekennzeichnet, daß** die Klebebeschichtung aus einem Naturkautschukkleber besteht.

10. Klebeband nach einem der Ansprüche 1 bis 8,
**dadurch gekennzeichnet, daß** die Klebebeschichtung aus einem Synthesekautschukkleber besteht.

11. Klebeband nach einem der Ansprüche 1 bis 8,
**dadurch gekennzeichnet, daß** die Klebebeschichtung aus einem Acrylatkleber besteht.

12. Klebeband nach Anspruch 11,
**dadurch gekennzeichnet, daß** der Acrylatkleber UV-vernetzbar ist.

13. Klebeband nach einem der Ansprüche 1 bis 12,
**dadurch gekennzeichnet, daß** die Klebebeschichtung derart ausgewählt ist, daß die Klebkraft auf der Oberfläche des Trägers auf der Seite, auf der die Antihaftbeschichtung aufgetragen ist, bei Prüfung nach der FINAT-Testmethode Nr. 10 im Bereich von etwa 1,0 bis etwa 4,0 N/cm liegt (Controlled Release).

14. Klebeband nach einem der Ansprüche 1 bis 12,
**dadurch gekennzeichnet, daß** die Klebebeschichtung derart ausgewählt ist, daß die Klebkraft auf der Oberfläche des Trägers auf der Seite, auf der die Antihaftbeschichtung aufgetragen ist, bei Prüfung nach der FINAT-Testmethode Nr. 10 im Bereich von etwa 0,02 bis etwa 0,20 N/cm liegt (Easy Release).
